# EUROPÄISCHE PATENTSCHRIFT

(11) **EP 1 174 733 B1**
(45) Veröffentlichungstag und Bekanntmachung des Hinweises auf die Patenterteilung: **02.02.2005**
(21) Anmeldenummer: 01117432.3
(22) Anmeldetag: 19.07.2001
(51) Int. Cl.: G01V 8/20

(54) **Optischer Sensor**
Optical sensor
Capteur optique

(30) Priorität: 21.07.2000 DE 10035465
(43) Veröffentlichungstag der Anmeldung: 23.01.2002
(73) Patentinhaber: Leuze electronic GmbH + Co KG, 73277 Owen/Teck (DE)
(72) Erfinder: Quapil, Gerald, Dr., 73277 Owen/Teck (DE); Schönhaar, Jürgen, 72669 Unterensingen (DE); Allgaier, Roland, 63268 Erkenbrechtsweiler (DE)
(74) Vertreter: Ruckh, Rainer Gerhard, Dr.

(56) Entgegenhaltungen:
- DE-A- 19 645 175
- DE-U- 29 707 451

## Beschreibung

Die Erfindung betrifft einen optischen Sensor gemäß dem Oberbegriff des Anspruchs 1.

Derartige Sensoren sind als Lichttaster ausgebildet und weisen einen Sendelichtstrahlen emittierenden Sender und einen Empfangslichtstrahlen empfangenden Empfänger auf, die in einem gemeinsamen Gehäuse integriert sind. Die vom Sender emittierten Sendelichtstrahlen werden von dem Objekt als Empfarigslichtstrahlen zurück zum Empfänger reflektiert. Zur Objektdetektion werden die Empfangssignale des Empfängers in einer Auswerteeinheit ausgewertet.

Der optische Sensor kann als Empfänger insbesondere einen ortsauflösenden Detektor aufweisen. Aus dem Auftreffpunkt der Empfangslichtstrahlen auf dem Empfänger kann dann in der Auswerteeinheit die Distanz eines Objektes zum Sensor berechnet werden.

Ein derartiger Empfänger kann insbesondere von einer CCD-Zeile mit einer zeilenförmigen Anordnung von CCD-Zeilenelementen gebildet sein. Prinzipiell kann der Empfänger auch von einer CMOS-Zeile mit einer zeilenförmigen Anordnung von CMOS-Zeilenelementen gebildet sein.

In jedem Fall werden derartige Zeilen von der Auswerteeinheit synchron angesteuert. Ein Beispiel ist in DE 19645175 gegeben.

Zur Ansteuerung der Zeile, insbesondere einer CCD-Zeile, wird in der Auswerteeinheit ein Taktsignal mit einer vorgegebenen Taktfrequenz generiert.

Zudem werden in der Auswerteeinheit Folgen von Start- und Shutter-Impulsen generiert, mit welchen die CCD-Zeile angesteuert wird.

Mittels dieser Steuersignale wird die CCD-Zeile in einem synchronen Betrieb betrieben. Dabei werden mit den Start- und Shutter-Impulsen aufeinander folgende Zeitintervalle generiert, welche Zykluszeiten bilden.

Insbesondere beginnt ein derartiges Zeitintervall jeweils durch einen Start-Impuls und endet mit dem jeweils folgenden Start-Impuls.

Am Anfang einer so definierten Zykluszeit werden zunächst die Signalwerte der CCD-Zeilenelemente, die bei der Messung während der vorigen Zykluszeit ermittelt wurden, zwischengespeichert und dann komplett ausgelesen und in die Auswerteeinheit übertragen. Anschließend werden die CCD-Zeilenelemente durch Kurzschließen deaktiviert, wobei die Inhalte der CCD-Zeilenelemente gelöscht werden.

Daran schließt eine Belichtungszeit an, innerhalb derer eine neue Messung zur Durchführung einer Objektdetektion erfolgt. Die Belichtungszeit ist insbesondere durch die Zykluszeit der CCD-Zeile vorgegeben. Alternativ kann die Belichtungszeit über Shutterimpulse am Ende der Belichtungszeit vorgegeben werden. Während einer derartigen Belichtungszeit werden in den CCD-Zeilenelementen neue Signalwerte generiert, deren Amplitudenverteilung über der Zeilenlänge ein Maß für die aktuelle Distanz des Objektes liefert, von welchem die Empfangslichtstrahlen zurück zur CCD-Zeile reflektiert werden.

Nachteilig bei derartigen optischen Sensoren ist, dass zu Beginn jeder Zykluszeit zunächst das Auslesen der alten Signalwerte der CCD-Zeilenelemente und dann das Löschen der Inhalte aller CCD-Zeilenelement erfolgen muss, bevor während einer anschließenden Belichtungszeit eine neue Messung durchgeführt werden kann.

Dies bedeutet, dass mit Auslösen eines Start-Impulses an den Empfänger dessen CCD-Zeilenelemente nicht sofort betriebsbereit sind. Vielmehr sind die CCD-Zeilenelemente erst nach einer Wartezeit einsatzbereit, deren Dauer im Wesentlichen durch die Zeit vorgegeben ist, die für das Kurzschließen und Auslesen der letzten Messung benötigt wird.

Diese Wartezeit kann bis zu einigen Millisekunden betragen und damit erheblich größer sein als die Belichtungszeit, die typischerweise im Mikrosekundenbereich liegt.

Dies führt zu einer unerwünscht großen Verlängerung der Reaktionszeiten des Sensors, wodurch dessen Einsatzmöglichkeiten erheblich beschränkt werden.

Dieser Nachteil wird dadurch verstärkt, dass bei derartigen Sensoren der Inhalt einer CCD-Zeile pro Zykluszeit jeweils einmal komplett ausgelesen wird. Ein gezieltes Auslesen von Signalwerten einzelner CCD-Zeilenelementen ist nicht möglich.

Der Erfindung liegt die Aufgabe zugrunde einen optischen Sensor der eingangs genannten Art so auszubilden, dass dieser möglichst kurze Reaktionszeiten aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optischer Sensor zum Erfassen von Objekten in einem Überwachungsbereich weist einen Sendelichtstrahlen emittierenden Sender und einen Empfangslichtstrahlen empfangenden Empfänger auf. Der Empfänger ist von wenigstens einer asynchron gesteuerten CMOS-Zeile mit einzeln ansteuerbaren CMOS-Zeilenelementen gebildet.

Durch die asynchrone Ansteuerung können die CMOS-Zeilenelemente in einem asynchronen Betrieb und unabhängig von Zykluszeiten, innerhalb derer Messungen zur Objektdetektion durchgeführt werden, durch Kurzschließen deaktiviert werden. Das Kurzschließen der CMOS-Zeilenelemente sowie deren Belichtung zur Durchführung von Messungen zur Objektdetektion kann somit unabhängig voneinander und zu frei wählbaren Zeiten erfolgen.

Der wesentliche Vorteil des erfindungsgemäßen Sensors besteht somit darin, dass bei Auslösen einer Messung zur Objektdetektion keine Wartezeiten entstehen, die durch ein Kurzschließen der CMOS-Zeilenelemente entstehen. Die Belichtungszeiten zur Durchführung der Messung beginnen vielmehr unmittelbar mit dem Start einer Messung. Die Reaktionszeit und damit die Messzeit des erfindungsgemäßen Sensors ist daher äußerst gering.

Dabei sind zudem einzelne CMOS-Zeilenelemente zu frei wählbaren Zeitpunkten ansteuerbar, so dass dementsprechend die Signalwerte einzelner CMOS-Zeilenelemente einzeln auslesbar und damit einzeln auswertbar sind.

Dabei kann das Auslesen der Signalwerte der CMOS-Zeilenelement zu frei wählbaren Zeitpunkten unterbrochen werden, so dass dadurch nur die Signalwerte einer bestimmten Anzahl von CCD-Zeilenelementen pro Auslesevorgang ausgelesen werden.

Durch diesen asynchronen Betrieb der CMOS-Zeile werden äußerst kurze Messzeiten erhalten. Besonders vorteilhaft ist dabei, dass bei Starten einer Messung keine Wartezeiten entstehen, da der Beginn der Belichtungszeit der CMOS-Zeile unmittelbar mit dem Start einer Messung zusammenfällt. Da bei den Messungen je nach Bedarf gezielt einzelne CMOS-Zeilenelemente ansprechbar sind, kann die jeweilige Messung gezielt an die jeweiligen Applikationsbedingungen angepasst und die Messzeit weiter verkürzt werden.

In einer besonders vorteilhaften Ausfiihrungsform ist der CMOS-Zeile eine Logikschaltung zugeordnet. Mit dieser Logikschaltung erfolgt die Ansteuerung der CMOS-Zeile und insbesondere die Vorgabe der Messzeiten. Weiterhin ist der CMOS-Zeile wenigstens eine Zwischenspeichereinheit zugeordnet, die aus einer Anordnung von Sample- and Hold-Elementen besteht. Dabei ist jedem CMOS-Zeilenelement ein Sample- and Hold-Element zugeordnet, in welchem der Signalwert des entsprechenden CMOS-Zeilenelements zwischengespeichert werden kann.

Die Steuerung der Einlesevorgänge und Auslesevorgänge von Signalwerten in den Sample- and Hold-Elementen wird ebenfalls von der Logikschaltung übernommen.

Die CMOS-Zeile mit der oder jeder Zwischenspeichereinheit sowie der Logikschaltung sind vorzugsweise auf einem Chip integriert und bilden eine gemeinsame integrierte Schaltung, welche kostengünstig herstellbar ist.

Dieser integrierten Schaltung ist eine Rechnereinheit zugeordnet, welche übergeordnete Steuersignale generiert und in die Komponenten der integrierten Schaltung einliest. Insbesondere sind über die Rechnereinheiten die Startzeiten vorgebbar, zu welchen einzelne Messungen zur Objektdetektion gestartet werden.

Weiterhin werden die Signalwerte aus der Zwischenspeichereinheit in die Rechnereinheit eingelesen, so dass dort die Auswertung der Signalwerte zur Detektion von Objekten im Überwachungsbereich erfolgen kann. Dabei erfolgt vor Einlesen in die Rechnereinheit vorzugsweise eine Digitalisierung der Signalwerte mittels eines Analog/Digital-Wandlers.

In einer vorteilhaften Ausführungsform der Erfindung sind der CMOS-Zeile zwei Zwischenspeichereinheiten zugeordnet, so dass jedem CMOS-Zeilenelement jeweils zwei Sample- and Hold-Elemente zugeordnet sind. Mit dieser Anordnung können die Signalwerte von zwei Messungen zwischengespeichert werden, wobei es sich hierbei vorzugsweise um zwei unmittelbar aufeinander folgende Messungen handelt.

Zwei derartige Messungen dienen insbesondere zur Unterdrückung von Fremdlichteffekten. Hierzu wird eine erste Messung bei eingeschaltetem Sender durchgeführt. Die dabei generierten Signalwerte in den CMOS-Zeilenelementen enthalten die Information über die Distanz des Objektes. Zugleich sind diesen Nutzsignalanteilen Störsignalanteile durch in der Umgebung vorhandene Fremdlichtquellen überlagert. Zur Elimination dieser Störsignalanteile erfolgt die zweite Messung bei ausgeschaltetem Sender, so dass dann die Signalwerte der CMOS-Zeilenelemente nur die Störsignalanteile enthalten. Anschließend werden für jedes CMOS-Zeilenelement die Signalwerte bei der Messungen subtrahiert. Die so gebildete Differenz enthält im Wesentlichen nur noch die Nutzsignalanteile, welche in der Rechnereinheit zur Objektdetektion ausgewertet werden. Die Differenzbildung erfolgt zweckmäßigerweise durch eine Hardware-Beschaltung, die der Rechnereinheit vorgeordnet ist.

Die Erfindung wird im Nachstehenden anhand der Zeichnungen erläutert. Es zeigen:
- Figur 1:: Schematische Darstellung der optomechanischen Komponenten des optischen Sensors.
- Figur 2:: Schematische Darstellung der Elektronikkomponenten eines ersten Ausführungsbeispiels des optischen Sensors.
- Figur 3:: Schematische Darstellung der Elektronikkomponenten eines zweiten Ausfuhrungsbeispiels des optischen Sensors.
- Figur 4:: Zeitdiagramme von Steuersignalen für den optischen Sensor gemäß Figur 2.
- Figur 5:: Zeitdiagramme von Steuersignalen für den optischen Sensor gemäß Figur 3 in einer ersten Betriebsart.
- Figur 6:: Zeitdiagramme von Steuersignalen für den optischen Sensor gemäß Figur 3 in einer zweiten Betriebsart.

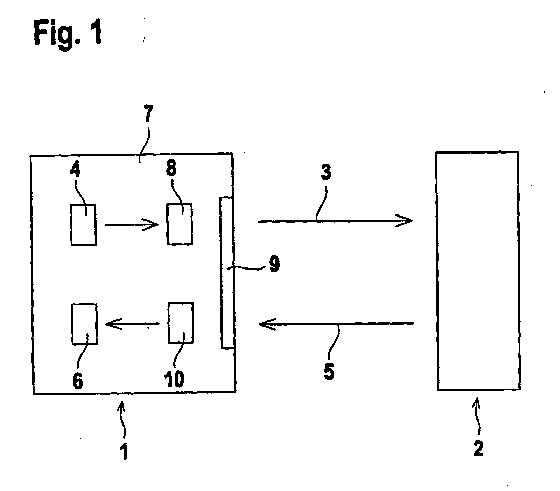

Figur 1 zeigt die optomechanischen Komponenten eines optischen Sensors 1 zum Erfassen von Objekten 2 in einem Überwachungsbereich. Der Sensor 1 weist einen Sendelichtstrahlen 3 emittierenden Sender 4 und einen Empfangslichtstrahlen 5 empfangenden Empfänger 6 auf, die in einem gemeinsamen Gehäuse 7 integriert sind. Die Sendelichtstrahlen 3 sind zur Strahlformung über eine Sendeoptik 8 geführt und gelangen durch ein Austrittsfenster 9 in der Frontwand des Gehäuses 7 in den Überwachungsbereich. Die Sendelichtstrahlen 3 werden von einem im Überwachungsbereich angeordneten Objekt 2 als Empfangslichtstrahlen 5 zurückreflektiert. Die Empfangslichtstrahlen 5 durchsetzen das Austrittsfenster 9 und werden über eine Empfangsoptik 10 auf den Empfänger 6 fokussiert.

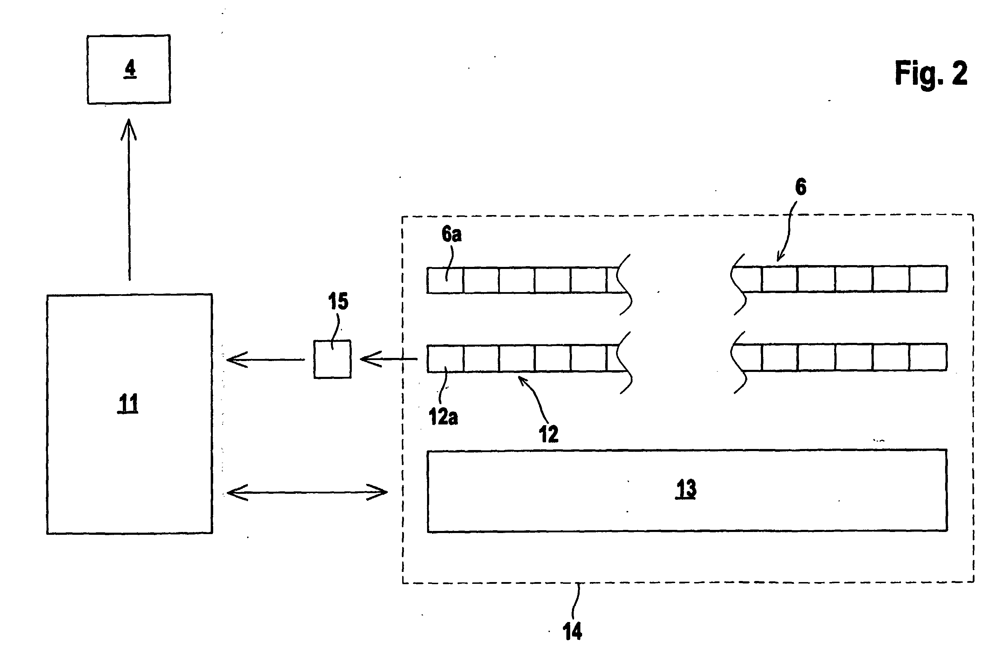

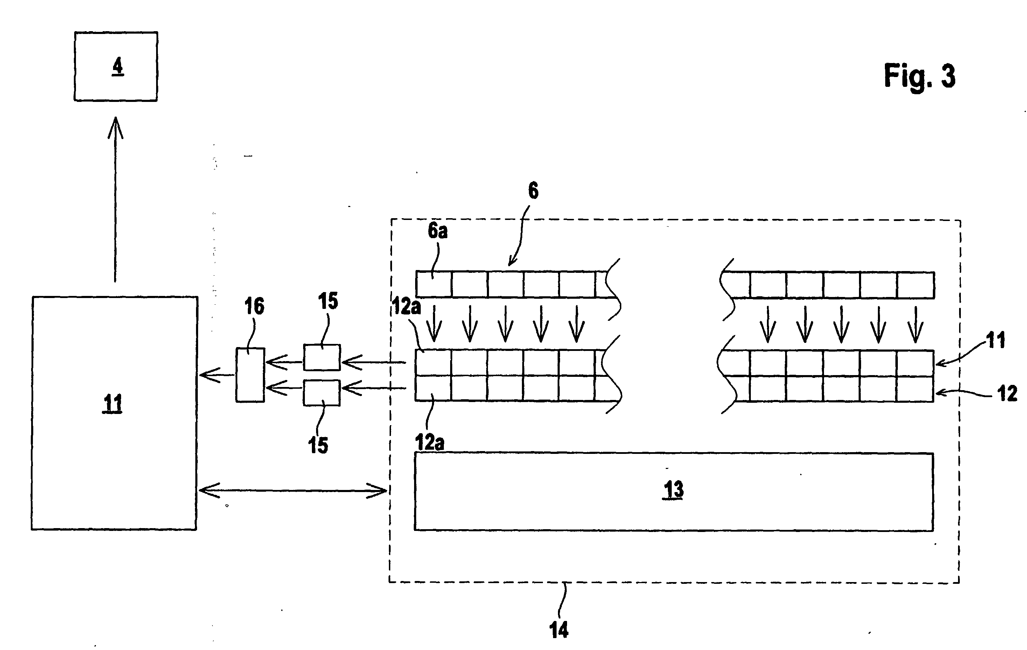

Die Figuren 2 und 3 zeigen zwei Ausführungsbeispiele der an den Sender 4 und den Empfänger 6 angeschlossenen Elektronikkomponenten des optischen Sensors 1.

Der Sender 4, der als Leuchtdiode oder als Laserdiode ausgebildet ist, wird von einer Rechnereinheit 11 angesteuert und emittiert vorzugsweise Sendelichtimpulse mit einem vorgebbaren Puls-Pausenverhältnis.

Die Rechnereinheit 11 ist von einem Microcontroller, einem ASIC oder dergleichen gebildet.

Der Empfänger 6 ist von einer CMOS-Zeile mit einer zeilenförmigen Anordnung von CMOS-Zeilenelementen 6a gebildet. Derartige CMOS-Zeilen weisen eine hohe Empfangsdynamik auf.

Die Empfangssignaldynamik ist durch das Verhältnis der maximalen und minimalen Amplituden Eₘₐₓ, Eₘᵢₙ von Signalwerten definiert, welche mittels den CMOS-Zeilenelementen 6a noch erfasst werden können.

Typischerweise liegt die Empfangsdynamik bei Werten von 10⁷ : 1. Zudem weisen derartige CMOS-Zeilen gegenüber CCD-Zeilen, die prinzipiell auch als Empfänger 6 für den optischen Sensor 1 einsetzbar sind, eine bis zu einer Größenordnung schnelle Signalauswertung auf.

Die CMOS-Zeile weist eine logarithmische Kennlinie auf, das heißt der Amplitudenverlauf der Signalwerte über den gesamten Amplitudenbereich ist logarithmisch ausgebildet.

Um im Anforderungsfall eine lineare Kennlinie zu erhalten, können mit dem Sensor 1 in kurzen zeitlichen Abständen mehrere Messungen zur Objektdetektion durchgeführt und anschließend aufsummiert werden.

Die CMOS-Zeile bildet einen ortsauflösenden Detektor, so dass mittels des Sensors 1 die Distanz eines Objektes 2 bestimmbar ist. Dabei liefert der Auftreffpunkt des Lichtflecks der Empfangslichtstrahlen 5 auf der CMOS-Zeile ein Maß für die Objektdistanz.

Die Amplituden der Signalwerte an den Ausgängen der einzelnen CMOS-Zeilenelemente 6a sind umso größer, je stärker die photoempfindlichen Flächen der CMOS-Zeilenelemente 6a belichtet werden. Die Berechnung der Objektdistanz erfolgt in der Rechnereinheit 11, wobei hierzu aus den Signalwerten der CMOS-Zeilenelemente 6a vorzugsweise der Schwerpunkt des Lichtflecks der Empfangslichtstrahlen 5 auf der CMOS-Zeile berechnet wird.

Bei dem Ausführungsbeispiel gemäß Figur 2 ist der CMOS-Zeile eine Zwischenspeichereinheit 12 zugeordnet, die eine zeilenförmige Anordnung von Sample- and Hold-Elementen 12a aufweist. Die Zwischenspeichereinheit 12 bildet ein Schieberegister, wobei jeweils ein Sample- and Hold-Element 12a einem CMOS-Zeilenelement 6a zugeordnet ist, so dass der Signalwert dieses CMOS-Zeilenelements 6a in dem zugeordneten Sample- and Hold-Element 12a zwischengespeichert wird.

Der CMOS-Zeile und der Zwischenspeichereinheit 12 ist eine Logikschaltung 13 zugeordnet, wobei sämtliche Komponenten in Form einer integrierten Schaltung 14 auf einem Chip integriert sind.

Die integrierte Schaltung 14 ist an die Rechnereinheit 11 angeschlossen. Von der Rechnereinheit 11 werden Steuersignale an die integrierte Schaltung 14 übertragen. Umgekehrt werden aus der Zwischenspeichereinheit 12 zu vorgegebenen Zeiten die zwischengespeicherten Signalwerte in die Rechnereinheit 11 eingelesen, in welcher aus den Signalwerten die Objektdistanz ermittelt wird.

Die analogen Signalwerte in der Zwischenspeichereinheit 12 werden dabei in einem Analog/Digital-Wandler 15 digitalisiert, bevor sie in die Rechnereinheit 11 eingelesen werden.

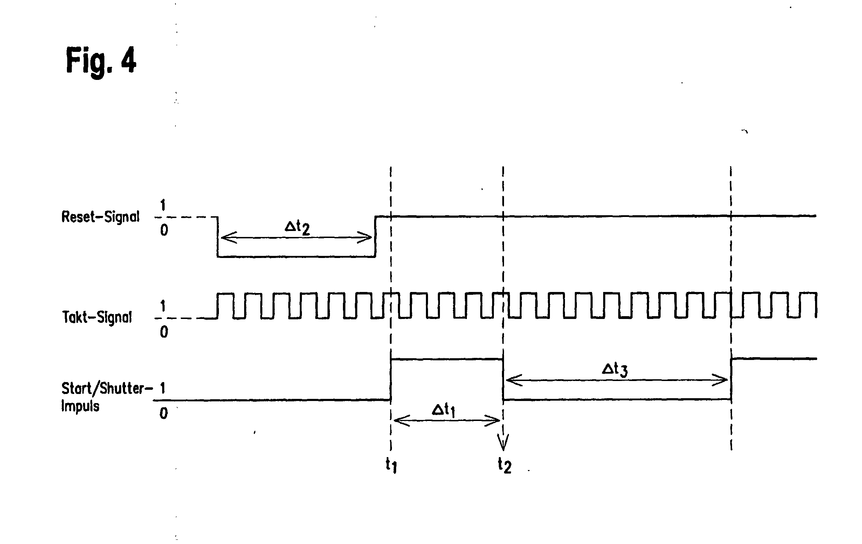

Figur 4 zeigt die Zeitdiagramme verschiedener Steuersignale für die Anordnung gemäß Figur 2. Zur Objektdetektion werden von dem Sender 4 Sendelichtimpulse mit einem vorgegebenen Puls-Pausen-Verhältnis emittiert. Ein vom Sender 4 emittierter Sendelichtimpuls wird vom Objekt 2 auf die CMOS-Zeile reflektiert. Die dabei an den CMOS-Zeilenelementen 6a registrierten Signalwerte werden in der Rechnereinheit 11 zur Distanzbestimmung ausgewertet. Die Länge eines jeden Sendelichtimpulses definiert dabei im Wesentlichen die Messzeit, innerhalb derer die Distanzbestimmung erfolgt. Die in Figur 4 mit Δt₁ bezeichnete Belichtungszeit ist an diese Messzeit angepasst. Die Belichtungszeit Δt₁ stellt das Zeitintervall dar, innerhalb dessen die CMOS-Zeilenelemente 6a aktiviert sind. Bei kontinuierlicher Lichteinstrahlung steigt der Signalwert des belichteten CMOS-Zeilenelements 6a innerhalb der Belichtungszeit Δt₁ fortlaufend und entsprechend der auftreffenden Lichtmenge an.

Um Messwertverfälschungen auszuschließen werden die einzelnen CMOS-Zeilenelemente 6a in den Sendepausen des Senders 4 durch Kurzschließen deaktiviert und dabei gelöscht. Das Kurzschließen der CMOS-Zeilenelemente 6a erfolgt über die Logikschaltung 13 in einem asynchronen Betrieb. Hierzu wird in der Logikschaltung 13 ein binäres Reset-Signal zur Ansteuerung der CMOS-Zeile generiert. Sobald das Reset-Signal den Schaltzustand "0" annimmt, erfolgt das Kurzschließen der CMOS-Zeilenelemente 6a. Vorzugsweise erfolgt gleichzeitig auch das Löschen der Sample- and Hold-Elemente 12a der Zwischenspeichereinheit 12. Das Zeitintervall, innerhalb dessen die Löschvorgänge erfolgten, ist in Figur 4 mit Δt₂ bezeichnet.

Das Löschen der CMOS-Zeilenelemente 6a und der Sample- and Hold-Elemente 12a während Δt₂ erfolgt asynchron zu den einzelnen Belichtungszeiten Δt₁. Die Zeitpunkte, zu welchen die Löschvorgänge beginnen, können in der Logikschaltung 13 vorgegeben sein oder über Steuersignale von der Rechnereinheit 11 vorgegeben werden, wobei mit den Steuersignalen die Logikschaltung 13 in geeigneter Weise angesteuert wird. In jedem Fall sind die Zeitintervalle Δt₂ frei und unabhängig von den Belichtungszeiten Δt₁ wählbar.

Die Durchführung der Messungen zur Objektdetektion wird durch die Rechnereinheit 11 gesteuert. Zum einen gibt die Rechnereinheit 11 den Sendetakt der Sendelichtimpulse vor. Zum anderen wird der Empfänger 6 von der Rechnereinheit 11 gesteuert. Hierzu wird von der Rechnereinheit 11 ein periodisches Taktsignal generiert und in die integrierte Schaltung 14 eingelesen. Zudem werden in der Rechnereinheit 11 binäre Start-/Shutter-Impulse generiert. Bei Anliegen eines Start-/Shutter-Impulses werden die CMOS-Zeilenelemente 6a aktiviert, das heißt die Dauer eines Start-/Shutter-Impulses definiert die Belichtungszeit Δt₁ der CMOS-Zeilenelemente 6a wie aus Figur 4 ersichtlich ist.

Die Belichtungszeit Δt₁ liegt typischerweise im Bereich zwischen 0,001 ms und 100 ms. Da das Kurzschließen asynchron und unabhängig von den Start/Shutter-Impulsen erfolgt, fällt der Anfang der Belichtungszeit Δt₁ mit dem Anfang des Start-/Shutter-Impulses bei t₁ zusammen. Dies bedeutet, dass bei Generierung eines Start-/Shutter-Impulses die CMOS-Zeilenelemente 6a ohne Wartezeit sofort aktiviert sind und zur Durchführung einer Messung bereit sind.

Nach Beenden des Start-/Shutter-Impulses bei t₂ erfolgt ein Abspeichern der Signalwerte der CMOS-Zeilenelemente 6a in dem entsprechenden Sample- and Hold-Element 12a. Dabei können bei der Messung über die Logikschaltung 13 sämtliche oder nur einzelne CMOS-Zeilenelemente 6a aktiviert und zur Messung herangezogen werden. Entsprechend werden im letzteren Fall nur die Signalwerte einzelner CMOS-Zeilenelemente 6a in die zugeordneten Sample- and Hold-Elemente 12a eingelesen.

Während des anschließenden Zeitintervalls Δt₃, innerhalb dessen kein Start/Shutter-Impuls ansteht, erfolgt das Auslesen der in der Zwischenspeichereinheit 12 abgespeicherten Signalwerte in die Rechnereinheit 11.

Danach kann mit einem neuen Start-/Shutter-Impuls eine neue Messung gestartet werden. Zweckmäßigerweise erfolgt vor Starten einer neuen Messung wieder ein Kurzschließen der CMOS-Zeilenelemente 6a und ein Löschen der Inhalte der Sample- and Hold-Elemente 12a.

Über das Reset-Signal können auch einzelne Messungen unterbrochen werden, wobei die Auswerte-Logik zum Auslesen von Signalwerten aus den CMOS-Zeilenelementen 6a und Zwischenspeichereinheiten 12 bei einer derartigen Unterbrechung zurückgesetzt wird.

Das in Figur 3 dargestellte Ausführungsbeispiel der Schaltungsanordnung des optischen Sensors 1 unterscheidet sich von dem Ausführungsbeispiel gemäß Figur 2 im Wesentlichen dadurch, dass zwei identische Zwischenspeichereinheiten 12 mit jeweils einer zeilenförmigen Anordnung von Sample- and Hold-Elementen 12a vorgesehen sind. In den Sample- and Hold-Elementen 12a der Zwischenspeichereinheiten 12 können die Signalwerte der CMOS-Zeilenelemente 6a, die bei zwei unterschiedlichen Messungen erhalten werden, getrennt abgespeichert werden.

Die Inhalte der Sample- and Hold-Elemente 12a beider Zwischenspeichereinheiten 12 werden analog zum Ausführungsbeispiel gemäß Figur 2 in die Rechnereinheit 11 eingelesen. Dabei werden die analogen Signalwerte der Sampleand Hold-Elemente 12a jeder Zwischenspeichereinheit 12 in einem Analog/Digital-Wandler 15 digitalisiert. Die digitalisierten Signalwerte beider Zwischenspeichereinheiten 12 werden dann einem Subtrahierglied 16 zugeführt. In dem Subtrahierglied 16 werden die Differenzen der Signalwerte entsprechender CMOS-Zeilenelemente 6a beider Zwischenspeichereinheiten 12 gebildet. Die so gebildeten Differenzen werden in die Rechnereinheit 11 eingelesen. Das Subtrahierglied 16 ist von einem digitalen Subtrahierer wie zum Beispiel einem FPGA oder einem Controller gebildet. Alternativ kann ein analoger Subtrahierverstärker vorgesehen sein, der direkt die Differenzen der Inhalte der Zweischenspeichereinheiten 12 bildet. Diese Differenzwerte werden dann über einen Analog/Digital-Wandler 15 der Rechnereinheit 11 zugeführt.

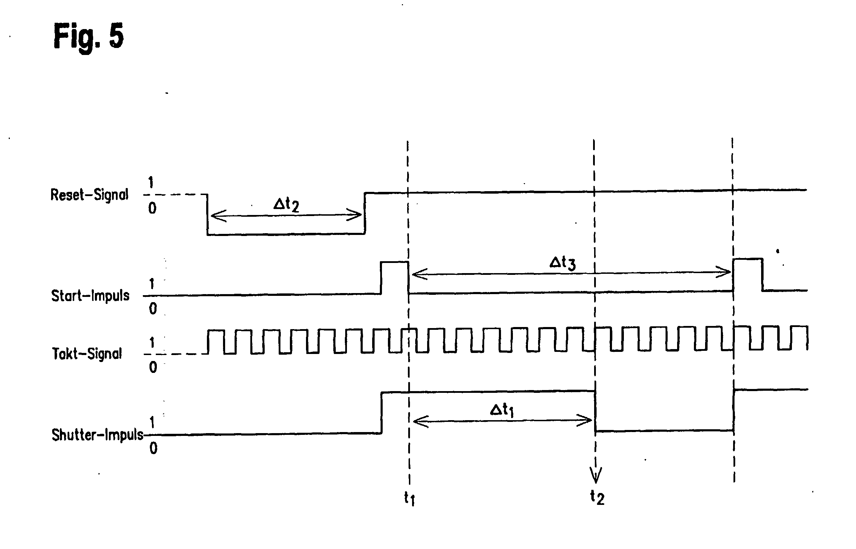

Figur 5 zeigt die Steuersignale für ein erstes Ausführungsbeispiel einer Ablaufsteuerung für die Anordnung gemäß Figur 3.

Das Kurzschließen der CMOS-Zeilenelemente 6a erfolgt analog zu dem Ausführungsbeispiel gemäß Figur 4 über die Logikschaltung 13 mittels des Reset-Signals während der Zeitintervalle Δt₂.

Die Rechnereinheit 11 generiert zur Ansteuerung der integrierten Schaltung 14 wiederum ein Taktsignal. Im Unterschied zum Ausführungsbeispiel gemäß Figur 4 generiert die Rechnereinheit 11 separate Folgen von Start-Impulsen und Shutter-Impulsen. Mit der fallenden Flanke eines Start-Impulses beginnt die Belichtungszeit Δt₁, das heißt zu diesem Zeitpunkt t₁ werden die CMOS-Zeilenelemente 6a aktiviert. Mit der fallenden Flanke des Shutter-Impulses, der gleichzeitig mit dem entsprechenden Start-Impuls beginnt endet die Belichtungszeit Δt₁ bei t₂.

Mit der fallenden Flanke des Start-Impulses bei t₁ werden Signalwerte, die vor dem letzten Kurzschließen von den CMOS-Zeilenelementen 6a in die erste Zwischenspeichereinheit 12 eingelesen wurden, in die zweite Zwischenspeichereinheit 12 umgespeichert. Dabei beginnt bereits zu diesem Zeitpunkt t₁ der Auslesevorgang zum Auslesen der Inhalte der Zwischenspeichereinheit 12.

Mit der fallenden Flanke des Shutter-Impulses bei t₂ werden dann in die nunmehr freien Sample- and Hold-Elemente 12a der ersten Zwischenspeichereinheit 12 die aktuellen Signalwerte, die während der vorangegangenen Belichtungszeit Δt₁ ermittelt wurden, eingelesen. Das Auslesen der Inhalte der Zwischenspeichereinheit 12 erfolgt während des Zeitintervalls Δt₃ zwischen zwei Start-Impulsen.

Eine derartige Auswertung eignet sich insbesondere auch für den Fall, dass im Unterschied zu der Ausführung gemäß Figur 3 nicht die Differenz der Inhalte der beiden Zwischenspeichereinheiten 12 gebildet wird. Anstelle dessen werden die Inhalte der Zwischenspeichereinheiten 12, die bei zwei aufeinander folgenden Messungen erhalten werden, für eine schnelle Signalauswertung getrennt ausgewertet. Je nach Anwendungsfall können dann auch einzelne Messungen während der Belichtungszeit Δt₁ über das Reset-Signal unterbrochen werden. Dabei werden auch die Auslesevorgänge über das Reset-Signal zurückgesetzt. Ein wesentlicher Vorteil der Anordnung gemäß Figur 3 besteht darin, dass die Zeitintervalle für die Belichtungszeit Δt₁ und für das Auslesen der Zwischenspeichereinheiten 12 Δt₃ überlappen können, da zwei Zwischenspeichereinheiten 12 zur Speicherung unterschiedlicher Messungen zur Verfugung stehen. Damit beträgt die maximale Messfrequenz f = 1/Δt₃, solange Δt₃ größer als Δt₁ ist. Diese ist damit unabhängig von der Belichtungszeit Δt₁.

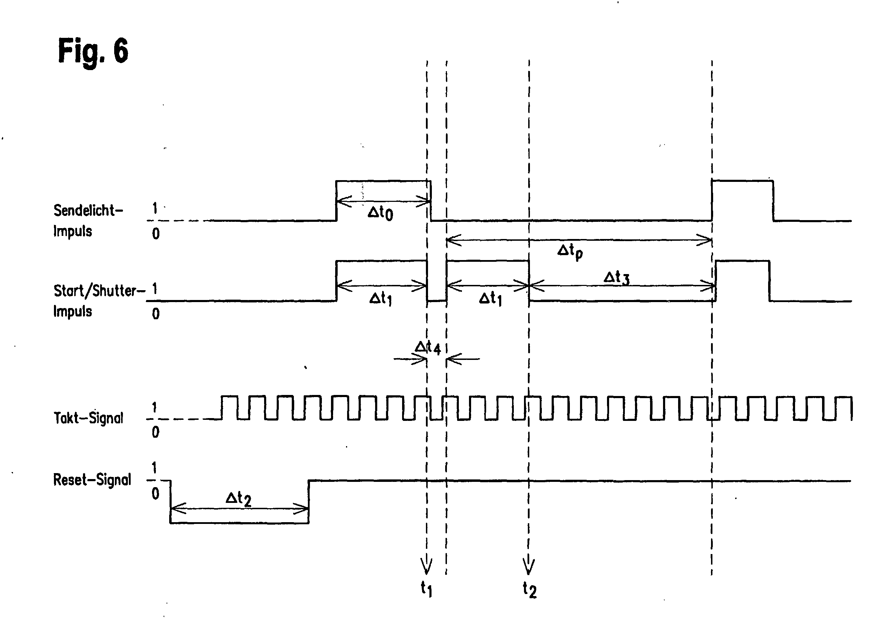

Figur 6 zeigt die Steuersignale für ein zweites Ausführungsbeispiel einer Ablaufsteuerung für die Anordnung gemäß Figur 3.

In diesem Fall erfolgt durch eine geeignete Verknüpfung zweier aufeinander folgender Messungen eine Fremdlichtunterdrückung bei dem optischen Sensor 1.

Der Kurzschluss der CMOS-Zeilenelemente 6a erfolgt wiederum während des Zeitintervalls Δt₂ mittels des Reset-Signals.

Die Steuersignale der Rechnereinheit 11 sind analog zum Beispiel gemäß Figur 3 von dem Taktsignal und von Start-/Shutter-Impulsen gebildet.

Die Pulsdauern der Start-/Shutter-Impulse definieren wiederum die Belichtungszeiten Δt₁.

Wie aus Figur 6 ersichtlich emittiert der periodische Sender 4 Sendelichtimpulse mit einer Dauer Δt₀, welche der Belichtungszeit Δt₁ entspricht. Auf einen Sendelichtimpuls folgt eine Sendepause mit der Dauer Δtₚ, Zwischen den Belichtungszeiten Δt₁ liegt eine Totzeit Δt₄.

Zur Unterdrückung von Fremdlichteinwirkungen werden zwei aufeinander folgende Messungen durchgeführt, wobei die Belichtungszeit jeweils Δt₁ beträgt. Wie aus Figur 6 ersichtlich ist der Sender 4 bei der ersten Messung einigeschaltet, jedoch bei der zweiten Messung ausgeschaltet. Damit erfolgt nur bei der ersten Messung eine Objektdetektion, die gegebenenfalls durch eine Fremdlichteinstrahlung verfälscht ist.

Da bei der zweiten Messung der Sender 4 ausgeschaltet ist, trifft in diesem Fall nur noch die Fremdlichteinstrahlung auf den Empfänger 6. Die Belichtungszeiten Δt₁ sind klein gewählt und liegen typischerweise zwischen 1µs und 10µs. Zudem folgen die beiden Messungen dicht aufeinander. Dadurch ist gewährleistet, dass sich die Fremdlichteinstrahlung während der Messungen nicht oder nur geringfügig ändert.

Nach der ersten Messung werden die Signalwerte der CMOS-Zeilenelemente 6a zum Zeitpunkt t₁ in die Sample- and Hold-Elemente 12a der ersten Zwischenspeichereinheit 12 eingelesen. Nach der zweiten Messung werden die Signalwerte der CMOS-Zeilenelemente 6a zum Zeitpunkt t₂ in die Sample- and Hold-Elemente 12a der zweiten Zwischenspeichereinheit 12 eingelesen.

Während des folgenden Zeitintervalls Δt₃ werden innerhalb der Sendepause Δtₚ die Inhalte der Zwischenspeichereinheit 12 ausgelesen und dem Subtrahierglied 16 zugeführt, in welchem das Differenzsignal beider Messungen gebildet wird. Hierzu werden die Signalwerte der entsprechenden Sample- and Hold-Elemente 12a der beiden Zwischenspeichereinheiten 12 subtrahiert. Durch die Differenzbildung ist der Fremdlichteinfluss der Messungen nahezu vollständig eliminiert.

Um Messwertverfälschungen auszuschließen müssen die CMOS-Zeilenelemente 6a während der Totzeit Δt₄ gelöscht werden. Hierzu ist wieder ein Kurzschließen der CMOS-Zeilenelemente 6a erforderlich, wobei das Kurzschließen der CMOS-Zeilenelemente 6a selbsttätig von der Logikeinheit durchgeführt wird.

Dadurch wird die Totzeit Δt₄ zwischen den Messungen unerwünscht groß. Um diesen Nachteil zu beheben können prinzipiell zwei Empfänger 6 vorgesehen sein, die jeweils von einer CMOS-Zeile gebildet sind und über separate Reset-Signale ansteuerbar sind. Dann können die beiden Messungen mit verschiedenen Empfängern 6 durchgeführt sein, so dass die Totzeit Δt₄ wie in Figur 6 dargestellt sehr kurz gewählt werden kann.

### Bezugszeichenliste

- (1): Sensor
- (2): Objekt
- (3): Sendelichtstrahlen
- (4): Sender
- (5): Empfangslichtstrahlen
- (6): Empfänger
- (6a): CMOS-Zeilenelement
- (7): Gehäuse
- (8): Sendeoptik
- (9): Austrittsfenster
- (10): Empfangsoptik
- (11): Rechnereinheit
- (12): Zwischenspeichereinheit
- (12a): Sample- and Hold-Element
- (13): Logikschaltung
- (14): Schaltung
- (15): Analog/Digital-Wandler
- (16): Subtrahierglied

## Patentansprüche

1. Optischer Sensor zum Erfassen von Objekten in einem Überwachungsbereich mit einem Sendelichtstrahlen emittierenden Sender und einem Empfangslichtstrahlen empfangenden Empfänger, **dadurch gekennzeichnet, dass** der Empfänger (6) von wenigstens einer asynchron gesteuerten CMOS-Zeile mit einzeln ansteuerbaren CMOS-Zeilenelementen (6a) gebildet ist, wobei mittels einer Logikschaltung (13) die CMOS-Zeilenelemente (6a) durch Kurzschließen zu vorgebbaren Zeiten deaktivierbar sind, die unabhängig von den Zeitpunkten von Start-Impulsen und/oder Shutter-Impulsen sind, mittels derer die CMOS-Zeilenelemente (6a) der CMOS-Zeile für eine vorgegebene Belichtungszeit (Δt₁) zur Durchführung einer Messung aktivierbar sind, so dass die Belichtungszeit (Δt₁) unmittelbar mit dem Start- und/oder Shutter-Impuls beginnt.

2. Optischer Sensor nach Anspruch 1, **dadurch gekennzeichnet, dass** über die Logikschaltung (13) einzelne CMOS-Zeilenelemente (6a) auslesbar sind.

3. Optischer Sensor nach einem der Ansprüche 1 oder 2, **dadurch gekennzeichnet, dass** der CMOS-Zeile wenigstens eine Zwischenspeichereinheit (12), bestehend aus einer Anordnung von Sample- and Hold-Elementen (12a) zugeordnet ist, wobei jeweils einem CMOS-Zeilenelement (6a) ein Sample- and Hold-Element (12a) zugeordnet ist, in welches der Signalwert des zugeordneten CMOS-Zeilenelements (6a) einlesbar ist.

4. Optischer Sensor nach Anspruch 3, **dadurch gekennzeichnet, dass** der CMOS-Zeile zwei Zwischenspeichereinheiten (12) zugeordnet sind, wobei jeweils ein Sample- and Hold-Element (12a) beider Zwischenspeichereinheiten (12) einem CMOS-Zeilenelement (6a) zugeordnet ist.

5. Optischer Sensor nach Anspruch 4, **dadurch gekennzeichnet, dass** in den Zwischenspeichereinheiten (12) die bei zu verschiedenen Zeiten erfolgten Messungen generierten Signalwerte der CMOS-Zeilenelemente (6a) abspeicherbar sind.

6. Optischer Sensor nach einem der Ansprüche 3-5, **dadurch gekennzeichnet, dass** die Einlesevorgänge zum Einlesen von Signalwerten der CMOS-Zeilenelemente (6a) in die Sample- and Hold-Elemente (12a) der Zwischenspeichereinheiten (12) zu vorgebbaren Zeiten durch die Logikschaltung (13) rücksetzbar sind.

7. Optischer Sensor nach einem der Ansprüche 1-6, **dadurch gekennzeichnet, dass** die CMOS-Zeile, die Logikschaltung (13) sowie die oder jede Zwischenspeichereinheit (12) Bestandteile einer integrierten Schaltung (14) sind.

8. Optischer Sensor nach einem der Ansprüche 3-7, **dadurch gekennzeichnet, dass** die in der oder jeder Zwischenspeichereinheit (12) gespeicherten Signalwerte in eine Rechnereinheit (11) einlesbar sind.

9. Optischer Sensor nach Anspruch 8, **dadurch gekennzeichnet, dass** die Signalwerte in einer Zwischenspeichereinheit (12) über einen Analog/Digital-Wandler (15) in die Rechnereinheit (11) eingelesen werden.

10. Optischer Sensor nach einem der Ansprüche 8 oder 9, **dadurch gekennzeichnet, dass** die Signalwerte entsprechender Sample- and Hold-Elemente (12a) zweier Zwischenspeichereinheiten (12) über ein Subtrahierglied (16) in die Rechnereinheit (11) eingelesen werden.

11. Optischer Sensor nach Anspruch 10, **dadurch gekennzeichnet, dass** dem Subtrahierglied (16) Signalwerte zweier aufeinander folgender Messungen zugeführt werden, wobei in der ersten Zwischenspeichereinheit (12) die bei einer ersten Messung bei aktiviertem Sender (4) erhaltenen Signalwerte abgespeichert sind, und wobei in der zweiten Zwischenspeichereinheit (12) die bei einer zweiten Messung bei deaktiviertem Sender (4) erhaltenen Signalwerte abgespeichert sind.

12. Optischer Sensor nach einem der Ansprüche 8-11, **dadurch gekennzeichnet, dass** die CMOS-Zeile, die oder jede Zwischenspeichereinheit (12) sowie die Logikschaltung (13) mit einem in der Rechnereinheit (11) generierten Taktsignal beaufschlagt sind.

13. Optischer Sensor nach einem der Ansprüche 1-12, **dadurch gekennzeichnet, dass** die Folgen von Start-Impulsen und/oder Folgen von Shutter-Impulsen zur Ansteuerung der Logikschaltung (13), der CMOS-Zeile und/oder der oder jeder Zwischenspeichereinheit (12) in der Rechnereinheit (11) generiert werden.

14. Optischer Sensor nach Anspruch 13, **dadurch gekennzeichnet, dass** die Dauer der Belichtungszeit (Δt₁) über die Rechnereinheit (11) vorgebbar ist.

15. Optischer Sensor nach einem der Ansprüche 15 oder 16, **dadurch gekennzeichnet, dass** zwischen zwei aufeinander folgenden Belichtungszeiten (Δt₁) eine Totzeit (Δt₄) liegt, innerhalb derer die CMOS-Zeilenelemente (6a) durch Kurzschließen deaktivierbar sind.

16. Optischer Sensor nach einem der Ansprüche 1 - 15, **dadurch gekennzeichnet, dass** die Dauer der Belichtungszeit (Δt₁) im Bereich zwischen 1µs und 100 ms liegt.

17. Optischer Sensor nach einem der Ansprüche 1-16, **dadurch gekennzeichnet, dass** mit diesem eine Distanzmessung durchgeführt wird.

18. Optischer Sensor nach Anspruch 17, **dadurch gekennzeichnet, dass** zur Bestimmung der Distanz aus den Signalwerten der CMOS-Zeilenelemente (6a) die Lage des Lichtflecks der Empfangslichtstrahlen (5) auf der CMOS-Zeile berechnet wird.

## Claims

1. Optical sensor for the detection of objects in a monitoring area, with a transmitter emitting transmitted light beams and a receiver receiving received light beams, **characterised in that** the receiver (6) comprises least one asynchronously controlled CMOS line sensor with individually actuated CMOS line elements (6a), in which the CMOS line elements (6a) can be deactivated by short-circuiting by means of a logic circuit (13) at specified times, which are independent of the times of start-pulses and/or shutter-pulses, by means of which the CMOS line elements (6a) of the CMOS line sensor can be activated for a specified exposure time (Δt₁) in order to perform a measurement, so that the exposure time (Δt₁) starts at the same time as the start-pulse and/or the shutter-impulse.

2. Optical sensor according to claim 1, **characterised in that** individual CMOS line elements (6a) can be read out via the logic circuit (13).

3. Optical sensor according to claims 1 and 2, **characterised in that** the CMOS line sensor is allocated to at least one intermediate memory unit (12), consisting of an arrangement of sample- and hold-elements (12a), with each CMOS line element (6a) being allocated to a sample- and hold-element (12a), into which is read the signal value of the allocated CMOS line element (6a).

4. Optical sensor according to claim 3, **characterised in that** two intermediate memory units (12) are allocated to the CMOS line sensor wherein each sample- and hold-element (12a) of both intermediate memory units (12) is allocated to a CMOS line element (6a).

5. Optical sensor according to claim 4, **characterised in that** the signal values of the CMOS line elements (6a) generated by measurements carried out at different times can be stored in the intermediate memory units (12).

6. Optical sensor according to claims 3-5, **characterised in that** the reading-in processes for the reading of signal values of the CMOS line elements (6a) into the sample- and hold-elements (12a) of the intermediate memory units (12) can be reset at specified times by the logic circuit (13).

7. Optical sensor according to claims 1 - 6, **characterised in that** the CMOS line sensor, the logic circuit (13) and the intermediate memory units (12) all form part of an integrated circuit (14).

8. Optical sensor according to claims 3-7, **characterised in that** the signal values stored in the intermediate memory unit(s) (12) can be read into a computer unit (11).

9. Optical sensor according to claim 8, **characterised in that** the signal values in an intermediate memory unit (12) can be read into the computer unit (11) via an analog/digital converter (15).

10. Optical sensor according to claims 8 and 9, **characterised in that** the signal values of the corresponding sample- and hold-elements (12a) of two intermediate memory units (12) are read into the computer unit (11) via a subtraction device (16).

11. Optical sensor according to claim 10, **characterised in that** signal values of two consecutive measurements are transmitted to the subtraction device (16), wherein the signal values obtained from the first measurement with an activated transmitter (4) are stored in the first intermediate memory unit (12), and the signal values obtained from the second measurement with a deactivated transmitter (4) are stored in the second intermediate memory unit (12).

12. Optical sensor according to claims 8-11, **characterised in that** the CMOS line, the intermediate memory units (12) and the logic circuit (13) are controlled by a timing signal generated in the computer unit (11).

13. Optical sensor according to claims 1-12, **characterised in that** the sequences of start-impulses and/or sequences of shutter-impulses for the control of the logic circuit (13), the CMOS line and/or the intermediate memory units (12) are generated in the computer unit (11).

14. Optical sensor according to claim 13, **characterised in that** the duration of the exposure time (Δt₁) can be specified via the computer unit (11).

15. Optical sensor according to claims 15 and 16, **characterised in that** there is a dead time (Δt₄) between two consecutive exposure times (Δt₁), during which the CMOS line elements (6a) can be deactivated by short-circuiting.

16. Optical sensor according to claims 1-15, **characterised in that** the duration of the exposure time (Δt₁) lies in the range between 1 µs and 10 µs.

17. Optical sensor according to claim 1-16, **characterised in that** the sensor can be used to perform a distance measurement.

18. Optical sensor according to claim 17, **characterised in that** the position of the received light beam (5) on the CMOS line sensor is calculated in order to determine the distance from the signal values of the CMOS line elements (6a).

## Revendications

1. Capteur optique servant à la saisie d'objets dans une zone de surveillance et possédant un émetteur émettant des rayons lumineux d'émission ainsi qu'un récepteur recevant des rayons lumineux de réception est **caractérisé par le fait que** le récepteur (6) est constitué d'au moins une ligne CMOS à commande asynchrone avec des éléments de ligne CMOS (6a) contrôlables individuellement, les éléments de ligne CMOS (6a) étant désactivés au moyen d'un circuit logique (13) par court-circuit à des instants données, ces instants- étant indépendants des instants des impulsions de start et/ou des impulsions shutter au moyen desquelles les éléments de ligne CMOS (6a) de la ligne CMOS peuvent être activés pour un temps d'exposition (Δt₁) donné afin d'effectuer une mesure de telle façon que le temps d'exposition (Δt₁) débute immédiatement par l'impulsion start et/ou shutter.

2. Capteur optique selon la revendication 1, **caractérisé par le fait que** des éléments de ligne CMOS (6a) individuels peuvent être sortis par lecture directe au moyen du circuit logique (13).

3. Capteur optique selon l'une des revendications 1 ou 2, **caractérisé par le fait qu'**au moins une unité de mémoire intermédiaire (12) est attribuée à la ligne CMOS, cette unité se composant d'une ordonnance d'éléments échantillonneurs-bloqueurs (12a), à un élément de ligne CMOS (6a) étant attribué à un élément échantillonneur-bloqueur (12a) dans lequel la valeur de signal de l'élément de ligne CMOS (6a) attribué peut être entrée par lecture directe.

4. Capteur optique selon la revendication 3, **caractérisé par le fait que** deux unités de mémoire intermédiaire (12) sont attribuées à la ligne CMOS, respectivement élément échantillonneur-bloqueur (12a) des deux unités de mémoire intermédiaire (12) étant attribué à un élément de ligne CMOS (6a).

5. Capteur optique selon la revendication 4, **caractérisé par le fait que** les valeurs de signal des éléments de ligne CMOS (6a) générées par les mesures effectuées à des temps différents peuvent être mémorisées dans les unités de mémoire intermédiaire (12).

6. Capteur optique selon l'une des revendications 3-5, **caractérisé par le fait que** les processus d'entrée par lecture directe servant à entrer les valeurs de signal des éléments de ligne CMOS (6a) dans les éléments échantillonneurs-bloqueurs (12a) des unités de mémoire intermédiaire (12) peuvent être remis à zéro à des temps donnés par le circuit logique (13).

7. Capteur optique selon l'une des revendications 1-6, **caractérisé par le fait que** la ligne CMOS, le circuit logique (13) ainsi que l'unité ou toute unité de mémoire intermédiaire (12) font partie intégrante d'un circuit intégré (14).

8. Capteur optique selon l'une des revendications 3-7, **caractérisé par le fait que** les valeurs de signal mémorisées dans l'unité ou toute unité de mémoire intermédiaire (12) peuvent être entrées par lecture directe dans une unité de calcul (11).

9. Capteur optique selon la revendication 8, **caractérisé par le fait que** les valeurs de signal dans une unité de mémoire intermédiaire (12) peuvent être entrées par lecture directe dans l'unité de calcul (11) au moyen d'un convertisseur analogique/numérique (15).

10. Capteur optique selon l'une des revendications 8 ou 9, **caractérisé par le fait que** les valeurs de signal des éléments échantillonneurs-bloqueurs (12a) correspondants des deux unités de mémoire intermédiaire (12) peuvent être entrées par lecture directe dans l'unité de calcul (11) au moyen d'un membre de soustraction (16).

11. Capteur optique selon la revendication 10, **caractérisé par le fait que** les valeurs de signal de deux mesures consécutives sont ajoutées au membre de soustraction, les valeurs de signal obtenues lors d'une première mesure avec émetteur activé (4) étant mémorisées dans la première unité de mémoire tampon (12) et les valeurs de signal obtenues lors d'une seconde mesure avec émetteur désactivé (4) étant mémorisées dans la seconde unité de mémoire tampon (12).

12. Capteur optique selon l'une des revendications 8-11, **caractérisé par le fait que** la ligne CMOS, l'unité ou toute unité de mémoire intermédiaire (12) ainsi que le circuit logique (13) sont alimentés avec un signal cadencé généré dans l'unité de calcul (11 ).

13. Capteur optique selon l'une des revendications 1-12, **caractérisé par le fait que** les successions d'impulsions de start et/ou les successions d'impulsions shutter sont générées dans l'unité de calcul (11) pour la commande du circuit logique (13), de la ligne CMOS et/ou de l'unité ou de toute unité de mémoire intermédiaire (12).

14. Capteur optique selon la revendication 13, **caractérisé par le fait que** la durée du temps d'exposition (Δt₁) peut être définie au moyen de l'unité de calcul (11).

15. Capteur optique selon l'une des revendications 15 ou 16, **caractérisé par le fait qu'**entre deux temps d'exposition (Δt₁) consécutifs se trouve un temps mort (Δt₄) à l'intérieur duquel les éléments de ligne CMOS (6a) peuvent être désactivés par court-circuit.

16. Capteur optique selon l'une des revendications 1-15, **caractérisé par le fait que** la durée du temps d'exposition (Δt₁) se trouve dans une marge entre 1 µs et 100 ms.

17. Capteur optique selon l'une des revendications 1 - 16, **caractérisé par le fait qu'**une mesure de distance est effectuée à l'aide de celui-ci.

18. Capteur optique selon la revendication 17, **caractérisé par le fait que** la position de la tache lumineuse des rayons lumineux de réception (5) sur la ligne CMOS est calculée afin de déterminer la distance à l'aide des valeurs de signal des éléments de ligne CMOS (6a).
